# EUROPÄISCHE PATENTSCHRIFT

(11) **EP 3 411 632 B1**
(45) Veröffentlichungstag und Bekanntmachung des Hinweises auf die Patenterteilung: **21.06.2023**
(21) Anmeldenummer: 17706684.2
(22) Anmeldetag: 31.01.2017
(51) Int. Cl.: F24D 3/14, E04F 13/00, E04C 2/34, E04C 2/38, E04C 2/52, F28F 3/12, F24F 5/00, F28D 1/03

(54) **WANDBAUTEIL FÜR EINE WANDHEIZUNG UND WANDHEIZUNG**
WALL COMPONENT FOR A WALL HEATING SYSTEM, AND WALL HEATING SYSTEM
COMPOSANT MURAL POUR CHAUFFAGE MURAL ET CHAUFFAGE MURAL

(30) Priorität: 01.02.2016 DE 102016001030
(43) Veröffentlichungstag der Anmeldung: 12.12.2018
(73) Patentinhaber: Schmitz, Michael, 77836 Rheinmünster (DE)
(72) Erfinder: Schmitz, Michael, 77836 Rheinmünster (DE)
(74) Vertreter: Lichti - Patentanwälte Partnerschaft mbB
(86) Internationale Anmeldenummer: PCT/EP2017/000113
(87) Internationale Veröffentlichungsnummer: WO 2017/133835

(56) Entgegenhaltungen:
- EP-A1- 2 423 398
- EP-A1- 2 681 493
- WO-A1-2013/087952
- DE-A1- 1 926 554
- DE-A1- 4 241 169
- DE-A1- 19 703 189
- FR-A2- 2 295 392
- US-A- 3 303 770

## Beschreibung

Die Erfindung betrifft eine Wandheizung gemäß dem Oberbegriff des Anspruchs 1.

Ein derartiges Wandbauteil wird genutzt, um Luft einer Luftquelle innerhalb eines Gebäudes durch dessen Wände zu Gebäudeinnenräumen zu leiten. Die Nut der Profilierung einer Grundplatte bildet mit der an der Grundplatte befestigten Abdeckung einen Strömungskanal.

Gattungsgemäße Wandbauteile haben den Nachteil, dass der Zugang von Luft zu den Strömungskanälen im Inneren des Wandbauteils nur mittels einer Bearbeitung der Abdeckung erfolgen kann, beispielsweise durch Durchbohren der Abdeckung, bis eine Verbindung vom Gebäudeinnenraum zum Strömungskanal geschaffen ist. Dieses Vorgehen ist mühsam und zeitaufwändig und es besteht die Gefahr von Verunreinigungen der Strömungskanäle, wobei Verunreinigungen aufgrund der Luftumwälzung in den Gebäudeinnenraum oder in Betriebseinrichtungen gelangen können. Der Verwendungszweck des Wandbauteils insbesondere im Rahmen einer Wandheizung ist daher stark eingeschränkt.

Aus der EP 2 681 493 A1 ist eine Wandheizung mit einem Wandbauteil bekannt, in das ein Heizköper integriert ist. Das Wandbauteil besitzt eine Grundplatte und eine auf der Grundplatte aufsetzbare Abdeckung. Im unteren Bereich sind in der Abdeckung mehrere Einströmöffnungen ausgebildet, durch die die zu erwärmende Luft aus dem Innenraum eines Gebäudes dem innerhalb des Wandbauteils angeordneten Heizkörper zuführbar ist. Die durch den Heizkörper erwärmte Luft steigt innerhalb des Wandbauteils auf und tritt an mehreren im oberen Bereich der Abdeckung ausgebildeten Ausströmöffnungen aus. Da der Heizkörper in das Wandbauteil fest integriert ist, ist das Wandbauteil konstruktiv aufwendig und benötigt eine zeitintensive Montage.

Einen grundsätzlich gleichen Aufbau einer Wandheizung zeigt auch die WO 2013/087952 A1, wobei zusätzlich eine Vielzahl von Luftleitelementen innerhalb des Wandbauteils vorgesehen sind.

Die EP 2 423 398 A1 zeigt eine isolierende Vorsatzschale für eine Bauteilwand, wobei die Vorsatzschale so angeordnet ist, dass zwischen der Vorsatzschale und der Bauteilwand ein Hinterlüftungsraum gebildet ist, der von Luft durchströmt ist. Eine Wandheizung ist gemäß der EP 2 423 398 A1 nicht vorgesehen.

Aus der US 3,303,770 A ist ein Gebäude bekannt, bei dem der Boden, die Wände und die Decke jeweils doppelwandig ausgebildet sind und Luftkanäle bilden, so dass die Luft in einem geschlossenem Kreislauf zirkulieren kann.

Es ist die Aufgabe der Erfindung, eine Wandheizung so weiterzubilden, dass ein einfacher und effizienter Zugang und Abgang von Luft zum Strömungskanal des Wandbauteils möglich ist.

Die erfindungsgemäße Aufgabe wird gelöst mittels einer Wandheizung mit den Merkmalen des Anspruchs 1. Die Wandheizung besitzt eine Luftquelle und es ist ein Boden bzw. Bodenbelag und ein unterhalb des Bodens oder Bodenbelags angeordneter Untergrund vorhanden. Auch dabei ist ein Wandbauteil vorgesehen, bei dem die Abdeckung mit einem Abstand von der unteren Kante der Grundplatte unter Bildung eines unteren frei liegenden Einströmbereichs der Grundplatte endet, wobei die Abdeckung mit einem Abstand von der oberen Kante der Grundplatte und der Bildung eines oberen frei liegenden Ausströmbereichs der Grundplatte endet und wobei die Nut zusammen mit der Abdeckung einen Strömungskanal ausbildet, der den unteren frei liegenden Einströmbereich und den oberen freiliegenden Ausströmbereich verbindet. Zwischen dem Bodenbelag und dem Untergrund ist ein Zwischenraum ausgebildet, in den Luft von der Luftquelle einleitbar ist und wobei die Luft durch den unteren frei liegenden Einströmbereich in den mindestens einen Strömungskanal einbringbar, entlang dem mindesten einen Strömungskanal strömbar und an den oberen frei liegenden Ausströmbereich der Grundplatte ausströmbar und in den Gebäudeinnenraum einbringbar ist.

Eine Grundüberlegung ist, dass der Zugang von Luft zu dem Strömungskanal des Wandbauteils mittels der Dimensionierung der Abdeckung möglich ist. Aufgrund der Tatsache, dass die Abdeckung die Grundplatte nicht vollständig überdeckt, insbesondere im unteren und oberen frei liegenden Ein- und Ausströmbereich der Grundplatte, liegt die Nut der Grundplatte in diesen Bereichen zum Zwischenraum bzw. zum Gebäudeinnenraum hin offen, so dass Luft in diesen Bereichen in die Nuten ein- bzw. ausströmen kann. Der Strömungskanal des Wandbauteils verbindet den Einströmbereich mit dem Ausströmbereich.

Durch die Ausgestaltung des Wandbauteils entfällt insbesondere die Notwendigkeit einer nachträglichen Bearbeitung des Wandbauteils und insbesondere dessen Abdeckung. Damit werden Verunreinigungen des Strömungskanals und insbesondere des Gebäudeinnenraums vermieden. Darüber hinaus sind keine zusätzlichen Bauteile wie Rohre, Stutzen, Manschetten oder dergleichen notwendig.

Mehrere Grundplatten können von einer Abdeckung überdeckt werden. Dies ist insbesondere dann sinnvoll, wenn eine Wand des Gebäudeinnenraums durch mehrere Grundplatten ausgestaltet werden soll, deren Dimension vorbekannt ist. Sämtliche Grundplatten können dann von einer einzigen Abdeckung überdeckt werden, was einer Einsparung von Material und Aufwand entspricht.

Darüber hinaus kann eine Grundplatte von mehreren Abdeckungen überdeckt sein. Dies ist insbesondere dann vorteilhaft, wenn zu dekorativen Zwecken eine bestimmte Anordnung von Abdeckungen auf der Grundplatte gewünscht ist. In diesem Fall sind beispielsweise auch Leitungen in die Zwischenräume zwischen mehreren Abdeckungen einbringbar.

Die Profilierung auf der Innenoberfläche der Grundplatte weist vorzugsweise neben der mindestens einen Nut mindestens einen Steg auf, insbesondere an den horizontal jeweils äußeren Kanten der Grundplatte. Die Stege begrenzen die Nuten und können insbesondere zur Abgrenzung von mehreren Nuten untereinander ausgestaltet sein. Vorzugsweise weist die Profilierung der Grundplatte Nuten und Stege in horizontal alternierender Anordnung auf.

Der Querschnitt der Nut oder der Nuten sollte über die gesamte Länge konstant sein. Alternativ kann vorgesehen sein, dass der Querschnitt der mindestens einen Nut sich verändert, wobei insbesondere die mindestens eine Nut mindestens eine Ausklinkung aufweisen kann. Die mindestens eine Nut bildet zusammen mit der Abdeckung den mindestens einen Strömungskanal zum Transport der Luft. Durch eine Veränderung des Querschnitts kann daher Einfluss auf die Strömungsdynamik der Luft genommen werden. So kann insbesondere eine bestimmte Nut verschließbar sein, um eine Strömung von Luft innerhalb dieser Nut bzw. des entsprechenden Strömungskanals zu unterbinden.

Gemäß der Erfindung ist der untere frei liegende Einströmbereich der Grundplatte unterhalb des Bodens oder Bodenbelags des Gebäudeinnenraums angeordnet. Im Sinne der Erfindung bezeichnet der Bodenbelag die dem Gebäudeinnenraum zugewandte obere Schicht des Bodens oder den oberen Konstruktionsbereich eines Bodenaufbaus, beispielsweise eines Fußbodens. Auf diese Weise kann Luft durch den Zwischenraum zwischen dem Bodenbelag und dem unterhalb des Bodenbelags angeordneten Untergrund zum unteren frei liegenden Einströmbereich der Grundplatte gelangen. Vorzugsweise ist eine Dichtungsvorrichtung zwischen der Abdeckung und dem Bodenbelag angeordnet, so dass ein Austausch von Luft unterhalb der Abdeckung im unteren frei liegenden Einströmbereich der Grundplatte zum Gebäudeinnenraum unterbunden ist.

Der obere freiliegende Ausströmbereich der Grundplatte kann unterhalb der Decke des Gebäudeinnenraums angeordnet sein. Insbesondere kann die Decke in unmittelbarem Kontakt mit der oberen Kante der Grundplatte stehen. Auf diese Weise ist ein Luftaustausch in einem Bereich oberhalb der Decke unterbunden.

Vorzugsweise ist die mindestens eine Nut vertikal und geradlinig ausgerichtet, was im Zusammenhang mit der Abdeckung eine besonders einfache Ausgestaltung des Strömungskanals darstellt. Darüber hinaus kann auch der mindestens eine Steg der Profilierung vertikal und geradlinig ausgerichtet sein.

In einer weiteren Ausgestaltung der Erfindung kann eine Vielzahl von parallel zueinander verlaufenden Nuten vorgesehen sein, was einer besonders einfachen Anordnung mehrerer Nuten entspricht. Darüber hinaus können auch die Stege der Profilierung der Grundplatte parallel zueinander verlaufen und insbesondere auch parallel zu den Nuten ausgerichtet sein.

Vorzugsweise ist vorgesehen, die Abdeckung mit Oberflächenbereichen der Grundplatte beispielsweise in den Kontaktbereichen zwischen den Stegen und der Abdeckung mittels eines und/oder dichtenden Haftmittels verbunden ist.

Vorzugweise ist vorgesehen, dass die Abdeckung an der Innenoberfläche der Grundplatte lösbar befestigt ist. Auf diese Weise ist ein schneller Zugriff auf die Nuten der Grundplatte möglich, wie auch ein Austausch der Abdeckung. Die lösbare Befestigung der Abdeckung an der Grundplatte kann mittels Kraft- und/oder Formschluss erfolgen. Zu diesem Zweck können Halteteile an der Grundplatte und/oder an der Abdeckung vorgesehen sein. Beispielsweise ist die Abdeckung mit hakenartigen Halteteilen versehen, die mit U-förmigen Bügeln auf der Innenseite der Grundplatte in Eingriff bringbar sind. Auf diese Weise wird das Kippmoment der Abdeckung von der Grundplatte aufgenommen und damit die Abdeckung an der Grundplatte gehalten. Zu diesem Zweck können die Halteteile mit Vorsprüngen und Ausnehmungen versehen sein, die miteinander in Eingriff bringbar sind. Vorzugsweise sind zusätzlich Hinterschneidungen vorgesehen.

Die an der Grundplatte lösbar befestigte Abdeckung kann horizontal und/oder vertikal beweglich sein. Dies kann beispielsweise mittels verschiebbarer Schlitten an der Abdeckung und/oder an der Grundplatte verwirklicht sein, beispielsweise Axialschlitten. Vorzugsweise sind die Schlitten an den Halteteilen angebracht.

Darüber hinaus kann die vorzugsweise lösbare Befestigung der Abdeckung an der Grundplatte mittels Positionierhilfen erfolgen, die insbesondere horizontal und/oder vertikal abgestuft und die vorzugsweise an den Halteteilen angebracht sind. Auf diese Weise ist eine Befestigung der Abdeckung an der Grundplatte in reproduzierbaren Positionen gewährleistet. Dies kann beispielsweise über Halteteile an der Abdeckung und/oder der Grundplatte verwirklicht werden, die eine abgestufte Profilierung aufweisen, in die Vorsprünge an definierten Stellen in Eingriff bringbar sind.

Vorzugsweise ist vorgesehen, dass auf der Innenoberfläche der Grundplatte mindestens eine Quernut vorgesehen ist, mit der ein Trägersystem zur Aufnahme der Abdeckung in Eingriff bringbar ist. Die Quernut kann beispielsweise als mindestens eine Ausnehmung auf dem mindestens einen Steg der Profilierung der Grundplatte ausgestaltet sein. Vorzugsweise sind sämtliche Stege mit jeweils einer Ausnehmung versehen.

Das Trägersystem weist beispielsweise einen Querbalken auf, der mit der mindestens einen Quernut in Eingriff bringbar ist und insbesondere darin gehalten ist. Darüber hinaus kann das Trägersystem weitere Halteteile aufweisen zur form- bzw. kraftschlüssigen und lösbaren Halterung der Abdeckung an der Grundplatte. Beispielsweise können die Halteteile in befestigtem Zustand der Abdeckung an der Grundplatte letztere umgreifen.

Die mindestens eine Abdeckung kann mehrteilig ausgestaltet sein, wobei insbesondere jedes Abdeckteil mit Halteteilen zur lösbaren Befestigung des Abdeckteils an der Grundplatte versehen ist. Ist beispielsweise der Zugang nur zu einem kleinen Bereich eines Strömungskanals gewünscht, entfällt die Notwendigkeit, die gesamte Abdeckung zu lösen, sondern es in diesem Fall muss nur ein spezifisches Abdeckteil gelöst werden.

Mindestens zwei benachbarte Abdeckteile der mindestens einen Abdeckung können mit gegenseitigem Abstand parallel zueinander angeordnet sein und zwischen sich einen Zwischenraum bilden, so dass eine mittlere Austrittsöffnung des Strömungskanals ausgebildet ist. Die Abdeckteile können insbesondere vertikal übereinander angeordnet sein, so dass der die mindestens eine mittlere Austrittsöffnung des Strömungskanals bildende Zwischenraum horizontal ausgerichtet ist. Dabei kann Luft im Strömungskanal des Wandbauteils durch die mittlere Austrittsöffnung in den Gebäudeinnenraum gelangen.

In einer alternativen Ausgestaltung ist die Abdeckung schwenkbar an der Grundplatte angeordnet, insbesondere schwenkbar um eine vertikale Achse. Auf diese Weise kann die Abdeckung einfach mit der Grundplatte verbunden und wieder gelöst werden. Beispielsweise kann dies mittels Scharnieren verwirklicht sein, insbesondere mittels Türangeln, wobei ein Teil einer Türangel an der Abdeckung und der andere Teil der Türangel an der Grundplatte befestigt ist.

In vorteilhafter Ausgestaltung erstreckt sich der untere frei liegende Einströmbereich der Grundplatte über die gesamte Breite der Grundplatte und weist eine vertikale Höhe im Bereich von 0,05 m bis 0,50 m, vorzugweise von 0,10 m bis 0,50 m auf. Sämtliche Strömungskanäle des Wandbauteils sind auf diese Weise für Luft aus dem Zwischenraum zwischen dem Boden bzw. Bodenbelag und dem Untergrund zugänglich. Der untere Einströmbereich ist groß genug, um eine problemlose Zufuhr von Luft zum Strömungskanal zu gewährleisten.

Der obere frei liegende Ausströmbereich der Grundplatte kann sich über die gesamte Breite der Grundplatte erstrecken und eine vertikale Höhe von 0,05 m bis 0,30 m, vorzugsweise von 0,05 m bis 0,15 m aufweisen. Auf diese Weise kann Luft von dem Strömungskanal über den oberen Ausströmbereich der Grundplatte hin zum Gebäudeinnenraum fließen. Insbesondere ist die vertikale Höhe des unteren frei liegenden Einströmbereichs grösser als die vertikale Höhe des oberen frei liegenden Ausströmbereichs der Grundplatte.

Die Grundplatte kann als tragendes Bauteil ausgestaltet sein, wobei tragend im Sinne der Erfindung bedeutet, dass das Bauteil neben seinem Eigengewicht auch zur Aufnahme von Lasten aus der Gebäudenutzung und/oder aus darüber liegenden Bauteilen, beispielsweise Decken, ausgestaltet ist. Auf diese Weise entfällt die Notwendigkeit für zusätzliche tragende Bauteile für den Gebäudeinnenraum, wodurch Material und Aufwand eingespart werden kann.

Alternativ dazu kann die Grundplatte auch als Vorsatzschale für ein tragendes Wandbauteil ausgestaltet sein. In diesem Fall ist die Grundplatte ein nicht tragendes Bauteil, so dass die Grundplatte lediglich ihr Eigengewicht aufnimmt. In diesem Fall können bereits bestehende Gebäudeinnenräume mit tragenden Wandbauteilen durch das erfindungsgemäße, nicht tragende Wandbauteil nachgerüstet werden.

Vorzugweise ist ein leistenartiger Vorsprung als Luftleitelement im oberen frei liegenden Ausströmbereich an der Grundplatte angeordnet. Als Luftleitelement dient der Vorsprung zur Richtung und Vergleichmäßigung der aus dem oberen frei liegenden Ausströmbereich in dem Gebäudeinnenraum eingeleiteten Luft. Dabei kann sich der leistenartige Vorsprung über die gesamte horizontale Breite der Grundplatte erstrecken, so dass der Vorsprung mit der Grundplatte horizontal bündig abschliesst. Zusätzlich oder alternativ dazu kann der Vorsprung kragend in Richtung des Gebäudeinnenraums ausgestaltet sein, so dass der Vorsprung die Abdeckung überragt. Auf diese Weise ist eine leichtere Richtung der in den Gebäudeinnenraum strömenden Luft möglich.

Im Bereich zwischen dem leistenartigen Vorsprung und der Abdeckung kann die Grundplatte mit einer Fuge an der Innenoberfläche versehen sein. Die Breite der Fuge entspricht vorzugsweise der horizontalen Breite der Grundplatte, so dass die Fuge horizontal mit der Grundplatte bündig abschließt. Die Tiefe der Fuge kann der Tiefe der mindestens einen Nut entsprechen, so dass ein bündiger Übergang zwischen der mindestens einen Nut und der Fuge ausgestaltet ist. Durch die Fuge wird eine weitere Vergleichmäßigung der aus den Strömungskanälen bzw. Nuten in den Gebäudeinnenraum einströmenden Luft ermöglicht. Weiterhin kann mindestens eine Leitung in der Fuge und/oder in der mindestens einen Nut der Grundplatte angeordnet sein. Auf diese Weise kann die Fuge wie auch die mindestens eine Nut zur Verlegung von Leitungen genutzt werden, was einen platzsparenden Aufbau mit sich bringt und einer einfachen Versorgung von Betriebseinrichtungen dient.

Der Vorsprung kann verstellbar, insbesondere um eine horizontale Achse schwenkbar ausgestaltet sein. Auf diese Weise ist die Richtung der in den Gebäudeinnenraum einströmenden Luft veränderbar. Die Verstellbarkeit des Vorsprungs kann manuell und/oder motorisch erfolgen, wobei die motorische Verstellung zusätzlich fernsteuerbar sein kann. Damit kann die Richtung der in den Gebäudeinnenraum einströmenden Luft von einem Benutzer, in der Regel von einem Bewohner des Gebäudeinnenraums, verändert werden. In vorteilhafter Ausgestaltung kann der Vorsprung in Abhängigkeit von Parametern des Gebäudeinnenraums verstellbar sein, gemessen etwa mittels mindestens eines Sensors im Gebäudeinnenraum, wobei der Sensor mit dem Wandbauteil verbunden ist. Auf diese Weise ist eine automatische Ansteuerung des Vorsprungs möglich.

Der Vorsprung kann in eine Schließposition bringbar sein, in der er den oberen Ausströmbereich der Grundplatte verschließt, so dass ein Austausch von Luft zwischen dem Gebäudeinnenraum und den Nuten bzw. den Strömungskanälen der Grundplatte unterbunden ist. Zu diesem Zweck kann das Wandbauteil im oberen Ausströmbereich der Grundplatte mindestens eine Dichtungsvorrichtung aufweisen. Die Dichtvorrichtung verbessert in Zusammenhang mit dem Vorsprung in seiner Schließposition die Dichtwirkung gegenüber dem Gebäudeinnenraum.

Die Parameter der Wandheizung, wie beispielsweise Temperatur und/oder Strömungsgeschwindigkeit der in dem Gebäudeinnenraum einzuströmenden Luft können veränderbar sein, insbesondere in Abhängigkeit von mindestens einem in dem Gebäudeinnenraum angeordneten Sensor, der vorzugsweise mit der Wandheizung verbunden ist.

Weitere Vorteile und Merkmale der Erfindung ergeben sich aus den Ansprüchen sowie aus der nachfolgenden Beschreibung, in der Ausführungsbeispiele der Erfindung unter Bezugnahme auf die Zeichnungen im Einzelnen erläutert sind. Dabei zeigen:
- Fig. 1: eine Ansicht eines Wandbauteil mit einer Grundplatte und einer Abdeckung;
- Fig. 2: den Schnitt II-II gemäß Fig. 1;
- Fig. 3: das Wandbauteil gemäß Fig. 1 in auseinander gezogener Darstellung;
- Fig. 4: ein Wandbauteil mit einer mehrteiligen Abdeckung;
- Fig. 5: ein Wandbauteil mit angelenkter Abdeckung;
- Fig. 6: eine Grundplatte in abgewandelter Ausführungsform;
- Fig. 7: ein Wandbauteil gemäß einer Weiterbildung;
- Fig. 8: eine Grundplatte mit mehreren Befestigungsvorrichtungen;
- Fig. 9,: 10, 11 und 12 Halteteile zur Befestigung der Abdeckung an der Grundplatte
- Fig. 13: eine Weiterbildung des Wandbauteils,
- Fig. 14: eine Detailansicht des Wandbauteils gemäß Fig. 13 und
- Fig. 15: eine Weiterbildung des Wandbauteils gemäß Fig. 13.

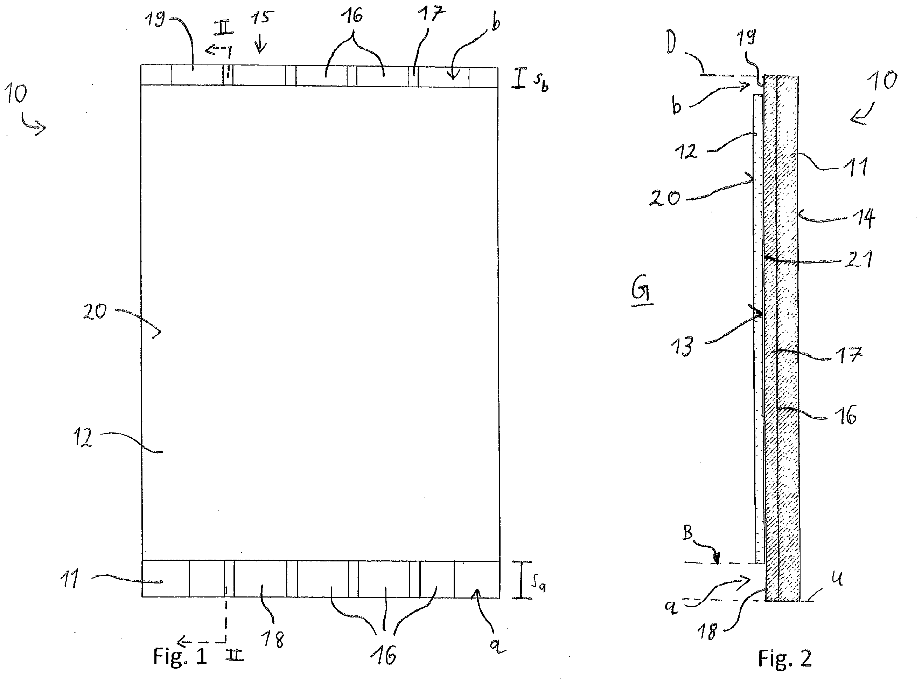

Fig. 1 zeigt eine Ansicht eines Wandbauteils 10 aus der Perspektive eines in einem Gebäudeinnenraum G (s. Fig. 2) stehenden Betrachters, wobei das Wandbauteil 10 eine Grundplatte 11 und eine Abdeckung 12 aufweist.

Die Grundplatte 11 bildet eine Wandscheibe und verläuft vertikal insbesondere zwischen einem in Fig. 2 nur schematisch angedeuteten Boden B des Gebäudeinnenraums G in Form eines plattenförmigen Bodenbelags und einer ebenfalls nur schematisch angedeuteten Decke D des Gebäudeinnenraums G. Die Grundplatte 11 besteht insbesondere aus Beton oder Mauerwerk und weist eine zum Gebäudeinnenraum G gerichtete Innenoberfläche 13 und eine dem Gebäudeinnenraum G abgewandte Außenoberfläche 14 auf. Gemäß den Fig. 1 und 2 ist die Grundplatte 11 als tragendes Wandteil dargestellt, das gegebenenfalls auch eine dämmende Funktion erfüllt. Alternativ dazu sind Ausgestaltungen denkbar, bei denen die Grundplatte 11 als Abdeckschale ausgebildet ist und zusätzlich zu einem bereits vorhandenen tragenden Wandteil angeordnet ist. In diesem Fall erfüllt die Grundplatte 11 keine tragende Funktion.

Auf ihrer Innenoberfläche 13 ist die Grundplatte 11 mit einer Profilierung 15 aus vertikalen kanalartigen Nuten 16 versehen, die horizontal versetzt auf Abstand nebeneinander angeordnet sind, parallel zueinander verlaufen und jeweils einen rechteckigen Querschnitt aufweisen. Jeweils zwei benachbarte Nuten 16 sind durch einen Steg 17 voneinander getrennt, wobei sämtliche Stege 17 ebenfalls vertikal verlaufen und parallel zueinander angeordnet sind. Sowohl die Nuten 16 als auch die Stege 17 erstrecken sich über die gesamte vertikale Höhe der Grundplatte 11 und bilden Strömungskanäle insbesondere für Luft. Darüber hinaus weisen die Stege 17 eine geringere horizontale Breite als die Nuten 16 auf. Zusammen mit der Abdeckung 12 sind die Nuten 16 als Strömungskanäle ausgebildet.

Die Abdeckung 12 ist plattenförmig ausgestaltet, vertikal ausgerichtet und auf der Innenoberfläche 13 der Grundplatte 11 angeordnet und gehalten. Die Abdeckung 12 endet vor der Unterkante der Grundplatte 11 mit einem Abstand Sₐ, so dass ein unterer frei liegender Einströmbereich a gebildet ist. Darüber hinaus endet die Abdeckung 12 vor der oberen Kante der Grundplatte 11 mit einem Abstand s_{b}, so dass ein oberer frei liegender Ausströmbereich b gebildet ist. Der untere frei liegende Einströmbereich a und der obere frei liegende Ausströmbereich b der Grundplatte 11 sind nicht von der Abdeckung 12 überdeckt und liegen zum Gebäudeinnenraum G hin frei. Der frei liegende untere Einströmbereich a der Grundplatte 11 erstreckt sich von der Unterkante der Abdeckung 12 bis zur Unterkante der Grundplatte 11 über deren gesamte Breite und weist eine vertikale Höhe sₐ im Bereich von 0,05 m bis 0,50 m, vorzugsweise von 0,10 m bis 0,50 m auf. In gleicher Weise erstreckt sich der frei liegende obere Ausströmbereich b der Grundplatte 11 von der oberen Kante der Abdeckung 12 bis zur oberen Kante der Grundplatte 11 über eine vertikale Höhe s_{b} im Bereich von 0,05 m bis 0,30 m und vorzugsweise von 0,05 m bis 0,15 m.

Die Nuten 16 liegen im unteren Einströmbereich a und im oberen Ausströmbereich b jeweils zum Gebäudeinnenraum G frei und bilden auf diese Weise im unteren Einströmbereich a Eintrittsöffnungen 18 für in das Wandbauteil 10 einströmende Luft, die in den Strömungskanälen des Wandbauteils 10 in vertikaler Richtung nach oben strömt und aus dem oberen Ausströmbereich b austritt, so dass die dortigen Nuten 16 Austrittsöffnungen 19 bilden.

Die Abdeckung 12 weist die gleiche horizontale Breite wie die Grundplatte 11 und eine demgegenüber verringerte vertikale Höhe auf. Eine Innenoberfläche 20 der Abdeckung 11 ist dem Gebäudeinnenraum G zugewandt, eine Außenoberfläche 21 der Abdeckung 12 ist der Grundplatte 11 zugewandt. Die Abdeckung 12 ist vorzugsweise lösbar mit ihrer Außenoberfläche 21 auf der Innenoberfläche 13 der Grundplatte 11 befestigt und an dieser gehalten.

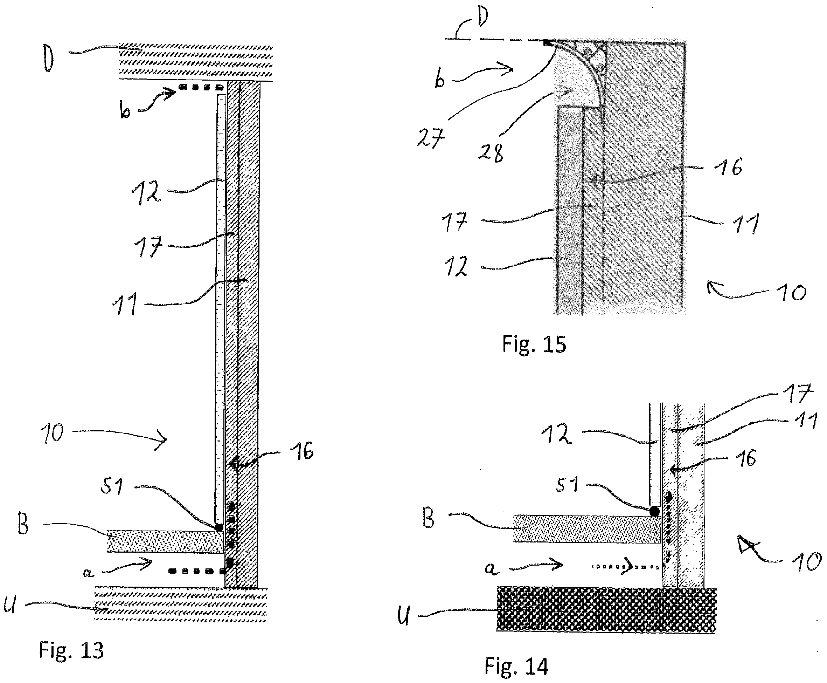

In Fig. 2 ist der Schnitt II-II des Wandbauteils 10 gemäß Fig. 1 dargestellt. Der Boden B des Gebäudeinnenraums G ist nur gestrichelt angedeutet und schließt bündig vorzugsweise unter Zwischenschaltung einer Dichtung 51 (s. Fig. 13) mit der unteren Kante der Abdeckung 12 ab, so dass der untere Einströmbereich a der Grundplatte 11 mit den Eintrittsöffnungen 18 unterhalb der Oberseite des Bodens B angeordnet ist. Die Decke D schließt bündig mit der oberen Kante der Grundplatte 11 ab, so dass der obere Ausströmbereich b der Grundplatte 11 und auch die obere Kante der Abdeckung 12 unterhalb der Decke angeordnet sind. Auf diese Weise ist es möglich, dass Luft und insbesondere Warmluft, die dem Zwischenraum zwischen dem Boden B und einem unterhalb des Bodens B angeordneten Untergrund U zugeführt wird, an den Eintrittsöffnungen 18 in die von der Abdeckung 12 abgedeckten Strömungskanäle der Grundplatte 11 einströmt, in diesen aufsteigt und am oberen Ende der Nuten 16 im Bereich der Austrittsöffnungen 19 aus dem oberen Ausströmbereich b austritt und in den Gebäudeinnenraum G einströmt.

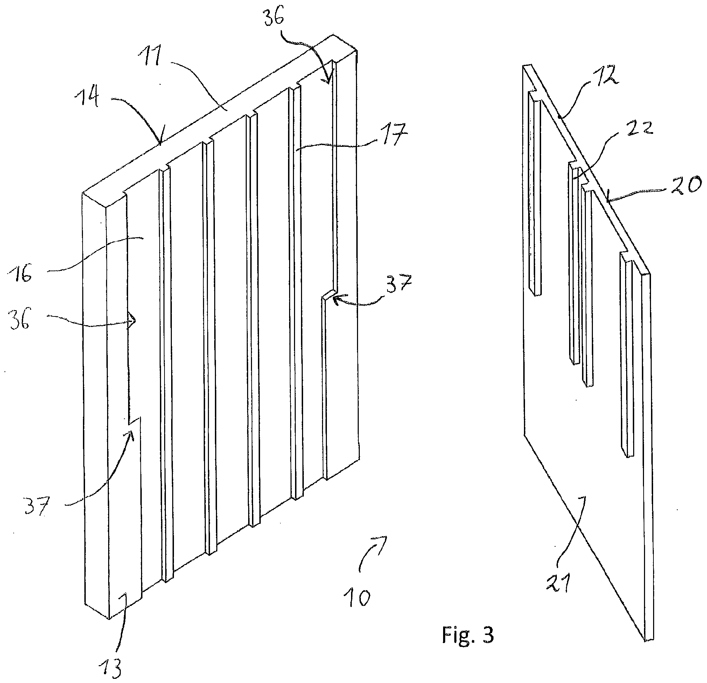

Fig. 3 zeigt das Wandbauteil 10 mit der Grundplatte 11 und der Abdeckung 12 in auseinander gezogener Darstellung. Die horizontal äußeren Nuten 16 der Grundplatte 11 weisen im oberen Bereich jeweils eine Ausklinkung 36 auf, so dass im oberen Bereich der äußeren Nuten 16 eine Querschnittsverbreitung mit einer konsolenartigen Abstufung 37 gebildet ist.

Die in Fig. 3 rechts dargestellte Abdeckung 12 weist auf ihrer Außenoberfläche 21 leistenartige, vertikale Vorsprünge 22 auf, die sich über die obere Hälfte der Abdeckung 12 erstrecken. Die Vorsprünge 22 sind parallel zueinander und horizontal versetzt nebeneinander angeordnet. Die Dicke der Vorsprünge 22 entspricht im wesentlichen der Tiefe der Nuten 16 der Grundplatte 11. Wenn die Abdeckung 12 auf der Grundplatte 11 angeordnet bzw. an dieser befestigt ist, stützen sich die unteren Enden der äußeren leistenartigen Vorsprünge 22 auf den konsolenartigen Abstufungen 37 der äußeren Nuten 16 der Grundplatte 11 ab. Die mittleren leistenartigen Vorsprünge 22 greifen in die mittleren Nuten 16 der Grundplatte 11 so ein, dass eine horizontale Verschiebung der Abdeckung 12 relativ zu der Grundplatte 11 verhindert und die Abdeckung 12 in vorbestimmter Weise an der Grundplatte 11 positioniert ist.

Alternativ können an den Konsolenartigen Abstufungen 37 und den Stegenden der Abdeckung und/oder an Kontaktpunkten von Nuten der Grundplatte und Stegen der Abdeckung Klebstoffe und/oder Dichtstoffe eingebracht sein.

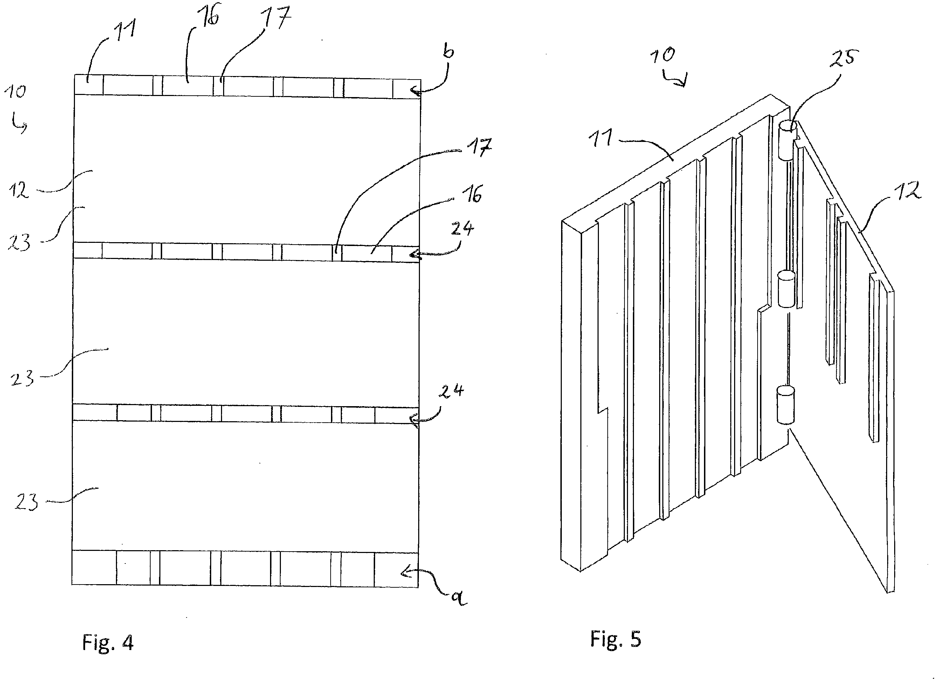

In Fig. 4 ist ein Wandbauteil 10 mit einer Grundplatte 11 und einer mehrteiligen Abdeckung 12 dargestellt. Die Grundplatte 11 entspricht der bereits beschriebenen Ausgestaltung. Die Abdeckung 12 weist drei vertikal übereinander und auf Abstand parallel zueinander jeweils quer angeordnete Abdeckteile 23 auf, die in vertikaler Richtung gegenseitig beabstandet sind, so dass zwischen ihnen horizontal verlaufende Zwischenräume 24 gebildet sind. In den Zwischenräumen 24 liegen die Nuten 16 der Grundplatte 11 zum Gebäudeinnenraum G hin frei, so dass mittlere Ausströmöffnungen für Luft aus den von den Nuten 16 mit der Abdeckung 12 gebildeten Strömungskanälen gebildet sind. Darüber hinaus sind auch der untere Einströmbereich a und der obere Ausströmbereich b der Grundplatte 11 zum Gebäudeinnenraum G hin frei gelegt, wie dies bereits oben beschrieben ist.

Fig. 5 zeigt eine Weiterbildung des Wandbauteils 10 gemäß Fig. 3, wobei die Abdeckung 12 mit der Grundplatte 11 über drei vertikal übereinander angeordnete Scharniere an der rechten Seite der Grundplatte 11 gelenkig verbunden ist. Die Abdeckung 12 ist somit relativ zur Grundplatte 11 wie eine Tür schwenkbar, wobei die Scharniere 25 als Drehpunkte dienen. Darüber hinaus erfüllen die Scharniere 25 eine Haltefunktion für die Abdeckung 12. Die Scharniere 25 sind beispielsweise als Türangeln ausgestaltet, also mehrteilige Scharniere, wie sie insbesondere bei Türen eingesetzt werden. Ein Teil einer Türangel ist dabei an der Grundplatte 11 befestigt, während das andere Teil der Türangel mit der Abdeckung 12 verbunden ist.

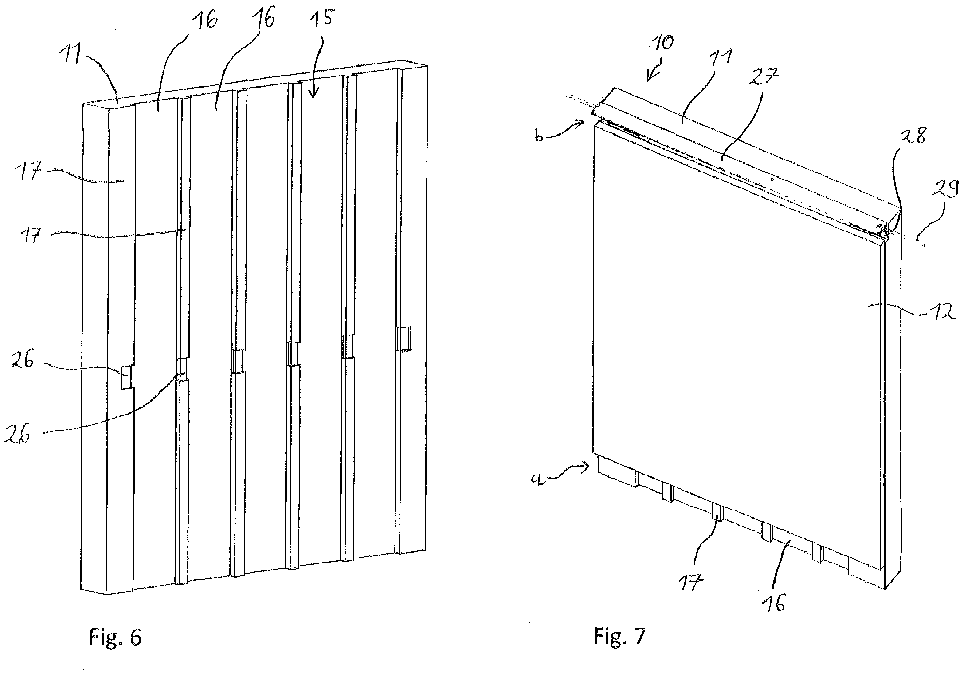

Eine andere Weiterbildung der Grundplatte 11 ist in Fig. 6 gezeigt. Die Grundplatte 11 weist die bereits erwähnte Profilierung 15 mit vertikalen Nuten 16 und Stegen 17 auf. Im Gegensatz zu der Grundplatte gemäß Fig. 3 sind die horizontal äußeren Nuten 16 nicht abgestuft, sondern weisen einen über die vertikale Länge hin gleichbleibenden Querschnitt auf.

Sämtliche Stege 17 sind auf etwa der mittleren Höhe der Grundplatte 11 mit einer rechteckigen Ausnehmung 26 versehen, wobei sämtliche Ausnehmungen 26 als Quernut auf der Innenoberfläche 13 der Grundplatte 11 ausgestaltet sind. Die Ausnehmungen 26 der horizontal jeweils äußeren Profilstege 17 links und rechts erstrecken sich nicht über die gesamte Breite der jeweiligen Stege 17. Im Gegensatz dazu erstrecken sich die Ausnehmungen 26 der inneren Stege 17 über jeweils deren gesamte Breite, so dass benachbarte Nuten 16 über die Ausnehmungen 26 miteinander verbunden sind. Die Tiefe der Ausnehmungen 26 ist kleiner als die Tiefe der Nuten 16, so dass die Böden der Ausnehmungen 26 die Nuten 16 überragen. Durch diese Ausgestaltung ist es beispielsweise möglich, einen Querbalken (nicht dargestellt) in der von sämtlichen Ausnehmungen 26 gebildeten Quernut anzubringen, der vertikal in den Ausnehmungen 26 gehalten und horizontal durch die jeweils äußeren Profilstege 17 fixiert ist. Der Querbalken kann an der Abdeckung 12 angebracht sein, so dass die Abdeckung 12 relativ zu der Grundplatte 11 durch den Eingriff des Querbalkens in die Ausnehmungen 26 genau und sicher positioniert ist.

Der Querbalken kann Teil eines Trägersystems sein, das zusätzlich zu dem Querbalken weitere Halterungselemente aufweist und das die Abdeckung 12 mit der Grundplatte 11 verbindet, beispielsweise mittels Haken/Klammern, die in befestigtem Zustand der Abdeckung 12 die Grundplatte 11 umgreifen.

Fig. 7 zeigt eine weitere Ausgestaltung des Wandbauteils 10, das einen leistenartigen horizontalen Vorsprung 27 im oberen Ausströmbereich der Grundplatte 11 aufweist, wobei der Vorsprung 27 als Luftleitelement dient. Die horizontale Breite des Vorsprungs 27 entspricht der Breite der Grundplatte 11, so dass der Vorsprung 27 horizontal mit der Grundplatte 11 bündig abschließt. Der leistenartige Vorsprung 27 kragt mit einer Kraglänge in den Gebäudeinnenraum G hinein, die größer als die Dicke der Abdeckung 12 ist, so dass der Vorsprung 27 die Abdeckung 12 überragt und mit Abstand überdeckt. Beispielsweise ist der Vorsprung 27 ein Metallblech oder ein Kunststoffteil.

Die Abdeckung 12 weist in bereits erläuterter Weise (Fig. 1) eine geringere Höhe als die Grundplatte 11 auf, so dass der untere Einströmbereich a und der obere Ausströmbereich b der Grundplatte 11 zum Gebäudeinnenraum G hin freigelegt sind. In Fig. 7 ist der obere Ausströmbereich b der Grundplatte 11 mit einer horizontal verlaufenden Fuge 28 versehen, die zwischen der oberen Kante der Abdeckung 12 und dem Vorsprung 27 angeordnet ist und die von den Nuten 16 gebildeten Strömungskanäle miteinander verbindet. Die horizontale Breite der Fuge 28 entspricht der Breite der Grundplatte 11, so dass die Fuge 28 horizontal mit der Grundplatte 11 bündig abschließt. Die Tiefe der Fuge 28 entspricht der Tiefe der Nuten 16, wobei zwischen den Nuten 16 und der Fuge 28 ein bündiger Übergang ausgestaltet ist. Die Fuge 28 kann als Installationskanal dienen, indem beispielsweise in der Fuge 28 eine horizontal verlaufende Leitung 29 angeordnet ist, die die Grundplatte 11 durchläuft.

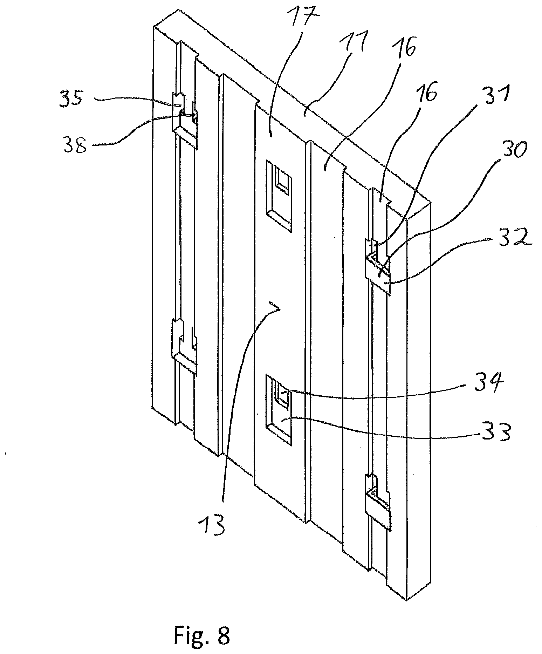

Fig. 8 zeigt eine Grundplatte 11 mit mehreren alternativen und lösbaren Befestigungsmöglichkeiten für die Abdeckung 12:
In der gemäß Fig. 8 rechten Nut 16 sind zwei vertikal versetzt und parallel zueinander verlaufende Bügel 30 angeordnet, die U-förmig ausgestaltet sind und einen als Basis dienenden Quersteg 32 sowie zwei Schenkel aufweisen. Die Bügel 30 sind beispielsweise aus Metall gefertigt und mit ihren Schenkeln mit der Grundplatte 11 verbunden und insbesondere in diese eingegossen. Im Bereich der Schenkel der Bügel 30 ist eine seitliche Ausnehmung 31 an den Stegen 17 der Grundplatte 11 vorgesehen, so dass der Querschnitt der Nut 16 im Bereich der Bügel 30 horizontal verbreitert ist. Die Querstege 32 schließen auf der den Gebäudeinnenraum G zugewandten Innenoberfläche 13 der Grundplatte 11 bündig mit den Stegen 17 ab.

Zur Befestigung der Abdeckung 12 an den Bügeln 30 der Grundplatte 11 ist die Abdeckung 12 an ihrer Außenoberfläche 21 mit hakenartigen Vorsprüngen (nicht gezeigt) versehen, die formschlüssig in die Zwischenräume der Bügel 30 zwischen den Querstegen 32 und dem Boden der Nut 16 eingreifen.

Der gemäß Fig. 8 mittlere Steg 17 der Grundplatte 11 weist zwei vertikal übereinander angeordnete erste Vertiefungen 33 mit rechteckiger Grundfläche auf. Die Tiefe der ersten Vertiefung 33 entspricht in etwa der Tiefe der Nut 16. Exzentrisch und vertikal nach oben versetzt ist im Boden der ersten Vertiefung 33 eine zweite Vertiefung 34 mit rechteckiger Grundfläche eingeformt.

Zur Befestigung der Abdeckung 12 an der Grundplatte 11 mittels der Vertiefungen 33, 34 ist die Außenoberfläche 21 der Abdeckung 12 mit Vorsprüngen (nicht dargestellt) versehen, deren Form komplementär zu den Vertiefungen 33, 34 ausgestaltet ist, so dass die Vorsprünge unter enger Passung in die Vertiefungen 33, 34 einsetzbar sind und sich dort verkanten und verkeilen. Dadurch wird das Kippmoment der Abdeckung 12 aufgenommen und die Abdeckung 12 an der Grundplatte 11 gehalten.

Die gemäß Fig. 8 linke Nut 16 der Grundplatte 11 ist mit zwei vertikal übereinander angeordneten Ausnehmungen 35 versehen. Im Boden jeder Ausnehmung 35 sind zwei vertikale, auf Abstand nebeneinander angeordnete Eingriffsschlitze 38 eingeformt, die Hinterschneidungen besitzen können. Zur Befestigung der Abdeckung 12 in den Ausnehmungen 35 der Grundplatte 11 sind auf der Außenoberfläche 21 der Abdeckung 12 Vorsprünge (nicht dargestellt) angeformt, die eine hakenartige Ausgestaltung aufweisen können. Die Vorsprünge greifen bei der Befestigung der Abdeckung 12 in die Eingriffsschlitze 35 der Ausnehmungen 35 ein, wodurch sie sich in diesen verkeilen und die Abdeckung 12 mit der Grundplatte 11 verbunden ist.

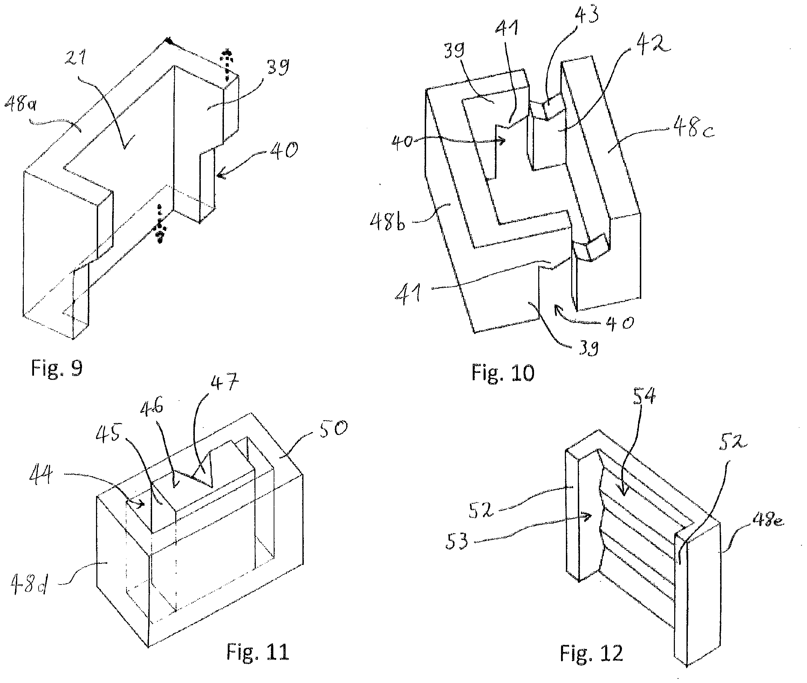

Fig. 9 zeigt ein an der Abdeckung 12 anbringbares Halteteil 48a, an dessen Außenoberfläche 21 zwei Vorsprünge 39 angeformt sind, die vertikal und parallel zueinander verlaufen und beabstandet zueinander angeordnet sind. Beide Vorsprünge 39 weisen jeweils gemäß Fig. 9 im unteren Bereich eine Ausnehmung 40 auf. Die Vorsprünge 39 können mit den in Fig. 8 gezeigten Vertiefungen 33, 34 der Grundplatte 11 vorzugsweise unter enger Passung in Eingriff gebracht werden. Auf diese Weise wird die Abdeckung 12 an der Grundplatte 11 verkeilt und gehalten.

Fig. 10 zeigt eine weitere Befestigungsmöglichkeit zwischen der Grundplatte 11 und der Abdeckung 12. Ein gemäß Fig. 10 links dargestelltes Halteteil 48b ist an der Abdeckung 12 angebracht und mit den bereits erwähnten Vorsprüngen 39 und Ausnehmungen 40 versehen. An der Oberseite der Ausnehmungen 40 ist an den Vorsprüngen 39 jeweils eine dreieckförmige Nase 41 angeformt, deren Spitze nach unten gerichtet ist.

Ein gemäß Fig. 10 rechts dargestelltes Halteteil 48c ist an der Grundplatte 11 angeordnet und weist im unteren Bereich zwei parallel und beabstandet zueinander angeordnete Vorsprünge 42 auf. Die Vorsprünge 42 erstrecken sich nur bis zur mittleren Höhe des Halteteils 48c. Auf der Oberseite der Vorsprünge 42 ist jeweils eine dreieckförmige Vertiefung 43 eingeformt, deren Spitze nach unten weist. Die Vertiefungen 43 sind komplementär geformt zu den Nasen 41 des Halteteils 48b der Abdeckung 12, so dass die Vertiefungen 43 und die Nasen 41 unter enger Passung in Eingriff bringbar sind.

In Fig. 11 ist in einem weiteren Ausführungsbeispiel ein Halteteil 48d der Grundplatte 11 gezeigt, das eine Vertiefung 44 mit rechteckigem Querschnitt aufweist, in der ein Schlitten 45 linear verschieblich gelagert ist. Der Schlitten 45 ist quaderförmig ausgestaltet, so dass er in der Vertiefung 44 horizontal beweglich ist. Mit seiner oberen Stirnseite 46 überragt der Schlitten 45 die obere Stirnseite 50 des Halteteils 48d. Auf der oberen Stirnseite 46 des Schlittens 15 ist eine dreieckige Einkerbung 47 ausgebildet, die sich nach unten hin verjüngt.

Zur Befestigung der Abdeckung 12 ist die Abdeckung 12 mit zumindest einer Nase (nicht dargestellt) versehen, die komplementär zu der Einkerbung 47 des Schlittens 45 geformt ist, so dass die Nase der Abdeckung 12 mit der Einkerbung 47 des Schlittens 45 beispielsweise unter enger Passung in Eingriff bringbar ist. Die Abdeckung 12 ist in befestigtem Zustand in die Einkerbungen 47 der Schlitten 45 eingehängt und wird von diesen gehalten. Aufgrund der Beweglichkeit der Schlitten 45 kann die Abdeckung 12 im gehaltenen Zustand in horizontaler Richtung verschoben und justiert werden.

Fig. 12 zeigt ein weiteres Halteteil 48e der Grundplatte 11, das an seinen beiden horizontalen Enden zwei Vorsprünge 52 aufweist, die zwischen sich eine Ausnehmung 53 begrenzen. Beide Vorsprünge 52 verlaufen senkrecht über die gesamte vertikale Höhe des Halteteils 48e und parallel zueinander. Die Ausnehmung 53 zwischen den beiden Vorsprüngen 52 weist an ihrem Boden eine im Querschnitt dreieckförmige Profilierung 54 auf, die in vertikaler Richtung über die gesamte Höhe des Halteteils 48e periodisch fortgesetzt ist.

Zur Befestigung der Abdeckung 12 an der Grundplatte 11 mit dem mindestens einen Halteteil 48e ist die Abdeckung 12 mit einem entsprechend der Profilierung 54 des Halteteils 48e komplementär geformten Vorsprung (nicht dargestellt) versehen, der insbesondere eine gewellte bzw. im Querschnitt dreieckige Form aufweist. Die Abdeckung 12 wird gegen die Grundplatte 11 gespannt, so dass der Vorsprung der Abdeckung 12 in die Profilierung 54 des Halteteils 48e der Grundplatte 11 hineinragt und formschlüssig gehalten ist. Der Vorsprung kann wahlweise in einer der Vertiefungen der Profilierung eingreifen, so dass das Halteteil 48e einer vertikal abgestuften Positionierhilfe entspricht. Unbeabsichtigte Horizontalbewegungen der Abdeckung 12 bei der Befestigung werden aufgrund der Vorsprünge 52 des Halteteils 48e vermieden, sobald der Vorsprung der Abdeckung 12 in die Ausnehmung 53 des Halteteils 48e ragt.

Alternativ können an den konsolenartigen Abstufungen 37 und den Stegenden der Abdeckung und/oder an Kontaktpunkten von Nuten der Grundplatte und Stegen der Abdeckung Klebstoffe und/oder Dichtstoffe eingebracht sein.

Das Wandbauteil 10 eignet sich insbesondere als Komponente einer Raumheizung, wobei im unteren Einströmbereich a des in Fig. 1 gezeigten Wandbauteils 10 warme Luft einer Luftquelle eingeleitet werden kann, die dann innerhalb der von den Nuten 16 gebildeten Strömungskanälen nach oben strömt. Am oberen Ausströmbereich b der Grundplatte 11 kann die Luft aus den Strömungskanälen zum Gebäudeinnenraum G hin austreten. In der gleichen Weise kann verbrauchte Luft des Gebäudeinnenraums G durch die Nuten 16 nach unten abgesaugt und ausgeleitet werden. Die Abdeckung 12 ist mit der Grundplatte 11 lösbar verbunden, wobei die Bewegung der Luft durch die Art der Befestigung nicht behindert ist.

Durch die Ausgestaltung der Grundplatte 11 sowie der Abdeckung 12 lassen sich auch die Geometrien der Nuten 16 bzw. der Strömungskanäle verändern: In der in Fig. 3 gezeigten Ausgestaltung des Wandbauteils 10 können durch die Vorsprünge 22 auf der Außenseite 21 der Abdeckung 12 einzelne oder alle Nuten 16 der Grundplatte 11 geschlossen bzw. verengt werden.

Der Vorsprung 27 des in Fig. 7 gezeigten Wandbauteils 10 bildet ein Leitelement für die aus den Nuten 16 ausströmende Luft, so dass der Austritt der Luft in den Gebäudeinnenraum G gerichtet und vergleichmäßigt wird.

Sowohl in den Nuten 16 als auch in der Fuge 28 können Leitungen 29 angeordnet sein, insbesondere auch bei dem Betrieb des Wandbauteils 10 als Raumheizung.

Die Fig. 13, 14 und 15 zeigen eine weitere Ausgestaltung des Wandbauteils 10 mit einer Grundplatte 11 und einer Abdeckung 12 schematisch im Querschnitt. Dabei ist gemäß Fig. 13 die Abdeckung 12 beabstandet zum Boden B angeordnet und eine Dichtung 51 verschließt den Zwischenraum zwischen der Abdeckung 12 und dem Boden B fluiddicht. Aus Fig. 13 ist weiterhin entnehmbar, dass der Boden B vertikal beabstandet zu einem Untergrund U angeordnet ist, so dass unterhalb des Bodens B ein Zwischenraum gebildet ist, in dem Luft zugeführt oder abgeführt werden kann. Die Grundplatte 11 steht auf dem Untergrund U auf, während die Abdeckung 12 über die Dichtung 51 mit dem Boden B in Anlage steht. Der Bereich der Grundplatte 11 zwischen dem Boden B und dem Untergrund U ist der bereits erwähnte untere Einströmbereich a.

In den Fig. 13 und 14 ist das Wandbauteil 10 als Komponente einer Raumheizung dargestellt: Warme Luft strömt im Zwischenraum zwischen dem Boden B und dem Untergrund U auf das Wandbauteil 10 zu, was durch die gestrichelte Linie dargestellt ist. Die warme Luft tritt im unteren Einströmbereich a der Grundplatte 11 in die Nuten 16 ein und steigt innerhalb der Strömungskanäle nach oben. Die Dichtung 51 zwischen der Abdeckung 12 und dem Boden B verhindert ein Austreten der Warmluft zwischen der Abdeckung 12 und dem Boden B, so dass die Warmluft weiter innerhalb der Strömungskanäle nach oben steigt. Aus Fig. 13 geht hervor, dass die Abdeckung 12 die Grundplatte 11 nicht vollständig überdeckt und der bereits erwähnte obere Ausströmbereich b der Grundplatte 11 zum Gebäudeinnenraum G hin freiliegt. Der obere Ausströmbereich b ist zwischen der Decke D und der oberen Kante der Abdeckung 12 ausgebildet. Die innerhalb der Strömungskanäle nach oben steigende warme Luft tritt im oberen Ausströmbereich b aus den Nuten 16 der Grundplatte 11 aus und wird in den Gebäudeinnenraum G geleitet.

In umgekehrter Weise kann verbrauchte Luft des Gebäudeinnenraums G im oberen Ausströmbereich b angesaugt und über die Strömungskanäle hinab geführt werden, bis die verbrauchte Luft im unteren Einströmbereich a austritt und über den Zwischenraum zwischen dem Boden B und dem Untergrund U abgeleitet werden kann.

Fig. 15 zeigt eine weitere Ausgestaltung des Wandbauteils 10, bei dem im oberen Ausströmbereich b der Grundplatte 11 der bereits erwähnte Vorsprung 27 in der Fuge 28 ausgebildet ist (s. Fig. 7) und horizontal bzw. senkrecht zur Zeichenebene der Fig. 15 verläuft. Der Vorsprung 27 ist als leistenförmiges Profilstück aus Metall oder Kunststoff ausgestaltet und dient als Luftleitelement für die aus Strömungskanälen zum Gebäudeinnenraum G strömende Warmluft. Der Vorsprung 27 kann mehrteilig ausgebildet sein, wobei mindestens eines der Teile des Vorsprungs 27 beweglich, beispielsweise um eine horizontale Achse schwenkbar ist, so dass der Neigungswinkel des Vorsprungs 27 in Bezug auf die Decke D einstellbar ist. Dadurch kann der Austrittswinkel der durch die Nuten 16 der Grundplatte 11 geleiteten Warmluft in den Gebäudeinnenraum G verändert werden. Die Verstellung des Vorsprungs 27 kann manuell oder motorisch erfolgen. Bei einem Austrittswinkel gegenüber der Decke D von 0°, wie in Fig. 15 dargestellt, liegt der Vorsprung 27 unmittelbar an der Decke an. Bei einem Austrittswinkel von 90° nimmt der Vorsprung 27 eine Schließposition ein, in der er den oberen Ausströmbereich b der Grundplatte 11 verschließt.

## Patentansprüche

1. Wandheizung mit einem Wandbauteil (10), das mindestens eine vertikal ausgerichtete Grundplatte (11) und mindestens eine plattenförmige Abdeckung (12) aufweist, die auf einer einem Gebäudeinnenraum (G) zugewandten Innenoberfläche (13) der Grundplatte (11) angeordnet ist, wobei die Innenoberfläche (13) der Grundplatte (11) eine Profilierung (15) mit mindestens einer Nut (16) aufweist, wobei die Abdeckung (12) mit einem Abstand (sₐ) von der unteren Kante der Grundplatte (11) unter Bildung eines unteren frei liegenden Einströmbereichs (a) der Grundplatte (11) endet, wobei die Abdeckung (12) mit einem Abstand (s_{b}) von der oberen Kante der Grundplatte (11) unter Bildung eines oberen frei liegenden Ausströmbereichs (b) der Grundplatte (11) endet und wobei die Nut (16) zusammen mit der Abdeckung (12) einen Strömungskanal ausbildet, der den unteren frei liegenden Einströmbereich (a) und den oberen frei liegenden Ausströmbereich (b) verbindet, **dadurch gekennzeichnet, dass** die Wandheizung eine Luftquelle, einen Bodenbelag und einen unterhalb des Bodenbelags angeordneten Untergrund aufweist, und dass zwischen dem Bodenbelag (B) und dem Untergrund (U) ein Zwischenraum ausgebildet ist, in den Luft von der Luftquelle einleitbar ist, und wobei die Luft durch den unteren frei liegenden Einströmbereich (a) des Wandbauteils (10) in den mindestens einen Strömungskanal einbringbar, entlang dem mindestens einen Strömungskanal strömbar und an dem oberen frei liegenden Ausströmbereich (b) der Grundplatte (11) ausströmbar und in den Gebäudeinnenraum (G) einbringbar ist.

2. Wandheizung nach Anspruch 1, **dadurch gekennzeichnet, dass** die mindestens eine Nut (16) vertikal und geradlinig ausgerichtet ist.

3. Wandheizung nach einem der vorangehenden Ansprüche, **dadurch gekennzeichnet, dass** die Abdeckung (12) an der Innenoberfläche (13) der Grundplatte (11) lösbar befestigt ist.

4. Wandheizung nach einem der vorangehenden Ansprüche, **dadurch gekennzeichnet, dass** auf der Innenoberfläche (13) der Grundplatte (11) mindestens eine Quernut (26) vorgesehen ist, mit der ein Trägersystem zur Aufnahme der Abdeckung (12) in Eingriff bringbar ist.

5. Wandheizung nach einem der vorangehenden Ansprüche, **dadurch gekennzeichnet, dass** die mindestens eine Abdeckung (12) mehrteilig ausgestaltet ist.

6. Wandheizung nach Anspruch 5, **dadurch gekennzeichnet, dass** mindestens zwei benachbarte Abdeckteile (23) der mindestens einen Abdeckung (12) mit gegenseitigem Abstand parallel zueinander angeordnet sind und zwischen sich einen Zwischenraum (24) bilden, so dass eine mittlere Austrittsöffnung des Strömungskanals gebildet ist.

7. Wandheizung nach Anspruch 6, **dadurch gekennzeichnet, dass** die Abdeckteile (23) vertikal übereinander angeordnet sind und der Zwischenraum (24) sich im wesentlichen horizontal erstreckt.

8. Wandheizung nach einem der vorangehenden Ansprüche, **dadurch gekennzeichnet, dass** sich der untere frei liegende Einströmbereich (a) der Grundplatte (11) über die gesamte Breite der Grundplatte (11) erstreckt und eine vertikale Höhe (sₐ) im Bereich von 0,05 m bis 0,50 m, vorzugsweise von 0,10 m bis 0,50 m aufweist.

9. Wandheizung nach einem der vorangehenden Ansprüche, **dadurch gekennzeichnet, dass** sich der obere frei liegende Ausströmbereich (b) der Grundplatte (11) über die gesamte Breite der Grundplatte (11) erstreckt und eine vertikale Höhe (s_{b}) im Bereich von 0,05 m bis 0,30 m, vorzugsweise von 0,05 m bis 0,15 m aufweist.

10. Wandheizung nach einem der Ansprüche 1 bis 9, **dadurch gekennzeichnet, dass** die Grundplatte (11) als Vorsatzschale für ein tragendes Wandbauteil ausgestaltet ist.

11. Wandheizung nach einem der vorangehenden Ansprüche, **dadurch gekennzeichnet, dass** ein leistenartiger Vorsprung (27) als Luftleitelement im oberen frei liegenden Ausströmbereich (b) an der Grundplatte (11) angeordnet ist.

12. Wandheizung nach Anspruch 11, **dadurch gekennzeichnet, dass** der Vorsprung in eine Schließposition bringbar ist, in der er den oberen Ausströmbereich (b) der Grundplatte (11) verschließt.

13. Wandheizung nach einem der Ansprüche 1 bis 12, **dadurch gekennzeichnet, dass** an mindestens einer Kontaktstelle zwischen der Abdeckung (12) und der Grundplatte (11) ein Haftmittel klebender und/oder dichtender Art angeordnet ist.

## Claims

1. Wall heater comprising a wall component (10) that has at least one vertically oriented base plate (11) and at least one planar cover (12) arranged on an inner surface (13) of the base plate (11) facing a building interior (G), the inner surface (13) of the base plate (11) having a profiled region (15) which has at least one groove (16), the cover (12) ending at a distance (sₐ) from the lower edge of the base plate (11) to form a lower exposed inflow region (a) of the base plate (11), the cover (12) ending at a distance (s_{b}) from the upper edge of the base plate (11) to form an upper exposed outflow region (b) of the base plate (11), and the groove (16) forming, together with the cover (12), a flow channel connecting the lower exposed inflow region (a) and the upper exposed outflow region (b), **characterized in that** the wall heater has an air source, a floor covering and a substrate arranged below the floor covering, and **in that** a gap is formed between the floor covering (B) and the substrate (U), into which gap air can be introduced from the air source, and it being possible for the air to be introduced through the lower exposed inflow region (a) of the wall component (10) into the at least one flow channel, to be able to flow along the at least one flow channel and to be able to flow out at the upper exposed outflow region (b) of the base plate (11) and to be able to be introduced into the building interior (G).

2. Wall heater according to claim 1, **characterized in that** the at least one groove (16) is oriented vertically and in a straight line.

3. Wall heater according to any of the preceding claims, **characterized in that** the cover (12) is releasably fastened to the inner surface (13) of the base plate (11).

4. Wall heater according to any of the preceding claims, **characterized in that** at least one transverse groove (26) is provided on the inner surface (13) of the base plate (11), with which transverse groove a support system for receiving the cover (12) can be brought into engagement.

5. Wall heater according to any of the preceding claims, **characterized in that** the at least one cover (12) is designed in multiple parts.

6. Wall heater according to claim 5, **characterized in that** at least two adjacent cover parts (23) of the at least one cover (12) are arranged in parallel with one another with mutual spacing and form a gap (24) between them, so that a central exit opening of the flow channel is formed.

7. Wall heater according to claim 6, **characterized in that** the cover parts (23) are arranged vertically one above the other and the gap (24) extends substantially horizontally.

8. Wall heater according to any of the preceding claims, **characterized in that** the lower exposed inflow region (a) of the base plate (11) extends over the entire width of the base plate (11) and has a vertical height (sₐ) in the range from 0.05 m to 0.50 m, preferably from 0.10 m to 0.50 m.

9. Wall heater according to any of the preceding claims, **characterized in that** the upper exposed outflow region (b) of the base plate (11) extends over the entire width of the base plate (11) and has a vertical height (s_{b}) in the range from 0.05 m to 0.30 m, preferably from 0.05 m to 0.15 m.

10. Wall heater according to any of claims 1 to 9, **characterized in that** the base plate (11) is designed as an attachment shell for a supporting wall component.

11. Wall heater according to any of the preceding claims, **characterized in that** strip-like projection (27) is arranged on the base plate (11) as an air deflection element in the upper exposed outflow region (b).

12. Wall heater according to claim 11, **characterized in that** the projection can be brought into a closed position in which it closes the upper outflow region (b) of the base plate (11).

13. Wall heater according to any of claims 1 to 12, **characterized in that** a sticky and/or sealing adhesive agent is arranged on at least one contact point between the cover (12) and the base plate (11).

## Revendications

1. Chauffage mural comportant un composant mural (10) qui présente au moins une plaque de base (11) orientée verticalement et au moins un élément de recouvrement (12) en forme de plaque disposé sur une surface intérieure (13) de la plaque de base (11) tournée vers un espace intérieur de bâtiment (G), la surface intérieure (13) de la plaque de base (11) présentant un élément profilé (15) comportant au moins une rainure (16), l'élément de recouvrement (12) se terminant à une certaine distance (sₐ) du bord inférieur de la plaque de base (11) en formant une zone d'afflux inférieure dégagée (a) de la plaque de base (11), l'élément de recouvrement (12) se terminant à une certaine distance (s_{b}) du bord supérieur de la plaque de base (11) en formant une zone d'évacuation supérieure dégagée (b) de la plaque de base (11), et la rainure (16) formant un conduit d'écoulement conjointement avec l'élément de recouvrement (12), lequel conduit d'écoulement relie la zone d'afflux inférieure dégagée (a) et la zone d'évacuation supérieure dégagée (b),
**caractérisé en ce que** le chauffage mural présente une source d'air, un revêtement de sol et un fond disposé en dessous du revêtement de sol,
**et en ce qu'**un espace intermédiaire est réalisé entre le revêtement de sol (B) et le fond (U), dans lequel espace intermédiaire de l'air peut être introduit depuis la source d'air, et l'air pouvant être introduit dans l'au moins un conduit d'écoulement par la zone d'afflux inférieure dégagée (a) du composant mural (10), pouvant s'écouler le long de l'au moins un conduit d'écoulement et pouvant être évacué au niveau de la zone d'évacuation supérieure dégagée (b) de la plaque de base (11) et pouvant être introduit dans l'espace intérieur de bâtiment (G).

2. Chauffage mural selon la revendication 1, **caractérisé en ce que** l'au moins une rainure (16) est orientée verticalement et en ligne droite.

3. Chauffage mural selon l'une quelconque des revendications précédentes, **caractérisé en ce que** l'élément de recouvrement (12) est fixé de manière amovible à la surface intérieure (13) de la plaque de base (11).

4. Chauffage mural selon l'une quelconque des revendications précédentes, **caractérisé en ce qu'**au moins une rainure transversale (26) est prévue sur la surface intérieure (13) de la plaque de base (11), avec laquelle rainure transversale un système de support permettant de recevoir l'élément de recouvrement (12) peut être amené en prise.

5. Chauffage mural selon l'une quelconque des revendications précédentes, **caractérisé en ce que** l'au moins un élément de recouvrement (12) est conçu en plusieurs parties.

6. Chauffage mural selon la revendication 5, **caractérisé en ce qu'**au moins deux pièces de recouvrement (23) adjacentes de l'au moins un élément de recouvrement (12) sont disposées parallèlement l'une à l'autre avec un écart mutuel et forment entre elles un espace intermédiaire (24), de sorte qu'une ouverture de sortie centrale du conduit d'écoulement est formée.

7. Chauffage mural selon la revendication 6, **caractérisé en ce que** les pièces de recouvrement (23) sont disposées verticalement les unes au-dessus des autres et l'espace intermédiaire (24) s'étend de manière sensiblement horizontale.

8. Chauffage mural selon l'une quelconque des revendications précédentes, **caractérisé en ce que** la zone d'afflux inférieure dégagée (a) de la plaque de base (11) s'étend sur toute la largeur de la plaque de base (11) et présente une hauteur verticale (sₐ) dans la plage de 0,05 m à 0,50 m, de préférence de 0,10 m à 0,50 m.

9. Chauffage mural selon l'une quelconque des revendications précédentes, **caractérisé en ce que** la zone d'évacuation supérieure dégagée (b) de la plaque de base (11) s'étend sur toute la largeur de la plaque de base (11) et présente une hauteur verticale (s_{b}) dans la plage de 0,05 m à 0,30 m, de préférence de 0,05 m à 0,15 m.

10. Chauffage mural selon l'une des revendications 1 à 9, **caractérisé en ce que** la plaque de base (11) est conçue sous la forme d'une coque de parement pour un composant mural porteur.

11. Chauffage mural selon l'une quelconque des revendications précédentes, **caractérisé en ce qu'**une saillie (27) en forme de baguette est disposée sur la plaque de base (11) comme élément de guidage d'air dans la zone d'évacuation supérieure dégagée (b).

12. Chauffage mural selon la revendication 11, **caractérisé en ce que** la saillie peut être amenée dans une position de fermeture dans laquelle elle ferme la zone d'évacuation supérieure (b) de la plaque de base (11).

13. Chauffage mural selon l'une des revendications 1 à 12, **caractérisé en ce qu'**un agent adhésif de type à assurer l'adhérence et/ou l'étanchéité est disposé au niveau d'au moins un point de contact entre l'élément de recouvrement (12) et la plaque de base (11).
